(19)

Europäisches
Patentamt
European
Patent Office
Office européen
des brevets

(11) **EP 4 174 776 B1**

(12) **EUROPEAN PATENT SPECIFICATION**

(45) Date of publication and mention
of the grant of the patent:
**08.10.2025 Bulletin 2025/41**

(21) Application number: **21205688.1**

(22) Date of filing: **29.10.2021**

(51) International Patent Classification (IPC):
***G06T 7/73*** *(2017.01)*

(52) Cooperative Patent Classification (CPC):
**G06T 7/73; B60D 1/36; B60D 1/62; B62D 13/06;
B62D 15/0285;** G06T 2207/30252

(54) **A METHOD FOR ESTIMATING A RELATIVE ANGLE BETWEEN AN IMAGE OBTAINING DEVICE
AND A VEHICLE**

VERFAHREN ZUR SCHÄTZUNG EINES RELATIVEN WINKELS ZWISCHEN EINER
BILDAUFNAHMEVORRICHTUNG UND EINEM FAHRZEUG

PROCÉDÉ PERMETTANT D'ESTIMER UN ANGLE RELATIF ENTRE UN DISPOSITIF
D'OBTENTION D'IMAGES ET UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.05.2023 Bulletin 2023/18**

(73) Proprietor: **VOLVO TRUCK CORPORATION
405 08 Göteborg (SE)**

(72) Inventors:
• **JOHANSSON, Daniel
413 20 Göteborg (SE)**
• **GÖTLIND, Helena
438 53 Hindås (SE)**

(74) Representative: **Kransell & Wennborg KB
P.O. Box 2096
403 12 Göteborg (SE)**

(56) References cited:
EP-A1- 3 552 926    WO-A1-2008/064892
WO-A1-2019/231470    US-A1- 2018 040 129

**Description**

TECHNICAL FIELD

The disclosure relates to a method for estimating a relative angle between an image obtaining device and a vehicle. The disclosure also relates to a method for docking an uncoupled vehicle to a second vehicle, a system, a second vehicle, a computer program, and to a computer readable medium.

The disclosure can be applied in heavy-duty vehicles, such as trucks, buses and construction equipment. Although the disclosure will be described with respect to a truck, the disclosure is not restricted to this particular vehicle, but may also be used in other vehicles such as buses, working machines and passenger cars.

BACKGROUND

For vehicles, such as heavy-duty trucks, it is known to make use of driver assistance systems during reversing. For example, a driver may be assisted by the system providing driving instructions, such as steering instructions, during a reversing operation. There are also more advanced systems, known as e.g. advanced driver assistance systems (ADAS). ADAS may for example take over at least some parts of steering, propulsion and braking during a reversing operation, thereby reducing the burden of the driver.

For example, docking a towing truck to an uncoupled trailer is often a challenging task. Therefore, the above-mentioned systems may be very useful in such situations. One important input to such systems may be information needed to estimate a relative angle between the two vehicles. This may for example be done by the trailer sending information about its position and orientation to the towing truck. For example, the position and orientation of the trailer may be obtained by use of GPS (Global Positioning System) information.

As another example, reversing of a vehicle combination comprising e.g. the above-mentioned towing truck and trailer when connected to each other is often a challenging task. Therefore, the above-mentioned systems may also be very useful in such situations. One important input to such systems when reversing the vehicle combination is also information needed to estimate the relative angle, or in this case the articulation angle, between the connected vehicles. The relative angle, or articulation angle, may be estimated by use of an angle sensor which is provided at the coupling joint of the towing truck.

According to its abstract, WO 2008/064892 A1 relates to a method for determining a position of a two-axle trailer having at least one movable wheel axle relative to a tractor vehicle, having the steps: generating image data with at least one associated measurement point, detecting at least three predefined measurement points in the image data, determining the position of each measurement point relative to the image recording device in reference coordinates of a predefined coordinate system, determining an absolute position of each measurement point with respect to the image recording device, determining from this an arrangement angle between a vehicle longitudinal axis of the tractor vehicle and a steering axis of the trailer, and an arrangement angle between the steering axis and a trailer longitudinal axis of the trailer.

Even though there are techniques for estimating a relative angle between a vehicle and another entity, there is still a strive to develop improved technology relating to relative angle estimation for vehicles. Still further, there is also a strive to develop further improved driver assistance systems, such as methods and/or systems for docking vehicles.

SUMMARY

In view of the above, an object of the disclosure is to provide an improved method for estimating a relative angle between an image obtaining device and a vehicle which alleviates at least one of the drawbacks of the prior art, or which at least is a suitable alternative. Furthermore, an object of the disclosure is to provide an improved system, vehicle, computer program and/or computer readable medium. Still further, an object of the disclosure is to provide an improved method for docking an uncoupled vehicle to a second vehicle, or to at least provide a suitable alternative.

According to a first aspect of the disclosure, the object is achieved by a method according to claim 1.

By the provision of a method according to the first aspect of the disclosure as disclosed herein, an improved method for estimating a relative angle between an image obtaining device and a vehicle is provided. For example, the disclosure is based on a realization to utilize at least a first and a second vehicle portion of the vehicle and to obtain dimension information as disclosed herein in order to efficiently estimate the relative angle. In particular, by obtaining the dimension information, utilizing information from the image and making use of trigonometric models, the relative angle can be efficiently estimated. This for example implies less processing power, faster angle estimation, cost-effectiveness and more reliable angle estimation.

The first line related to the image obtaining device is a line associated with the image obtaining device. For example, the first line may be a line which extends in an image obtaining direction directed straight out from the image obtaining device. The first line may additionally or alternatively extend in a longitudinal direction of an entity on which the image obtaining device is provided during use. The entity may for example be a second vehicle as disclosed herein. The longitudinal extension of the vehicle is typically corresponding to a travel direction of the vehicle, and the second longitudinal line may for example be a mid-longitudinal line of the vehicle, such as a line which intersects a coupling joint of the vehicle.

Optionally, the first vehicle portion may be a vertically or horizontally extending portion of the vehicle and the second vehicle portion may be a vertically or horizontally extending portion of the vehicle. Preferably, the first and second vehicle portions are outer edges of the vehicle. It has further been realized that it may be easier to identify vertical and/or horizontally extending portions of e.g. a vehicle body, and in particular outer edges of the vehicle body. For example, the vehicle body, such as a trailer body, may be substantially shaped as a rectangular block, and e.g. two of its outer edges may thereby be efficiently used as the first and second vehicle portions. Utilizing outer edges as the first and second vehicle portions implies reduced requirement of image processing/analysis. In addition, utilizing vertically or horizontally extending portions implies reduced processing power for the trigonometric models.

Optionally, obtaining dimension information of the vehicle may comprise estimating at least one of the first and second lengths of the first and second vehicle portions. Information about the dimension of the vehicle may not always be available. Thereby, by estimating the at least one of the first and second lengths, the relative angle can be estimated without exact dimension information, i.e. dimension information which is not estimated. For example, one of the first and second lengths may be available, whereby the other length may be estimated by use of the available length. More specifically, the first and a second vehicle portions may be similar and/or corresponding portions, such as outer edges as mentioned in the above. Thereby, by using the available length of one of the first and second vehicle portions to estimate the length of the other one of the first and second vehicle portions, a more efficient relative angle estimation can be achieved.

Still optionally, the estimation of the at least one of the first and second lengths of the first and second vehicle portions may be based on at least one of information from the image, manual input from an operator, input from a database, and sensor information from one or more sensors which have observed the vehicle during driving of the vehicle. For example, the vehicle, such as a trailer, may have been connected to another vehicle, such as the herein mentioned second vehicle, whereby the estimation has been performed by sensors on the second vehicle when the vehicle and the second vehicle were connected. Accordingly, the estimation of the at least one of the first and second lengths of the first and second vehicle portions may have been performed in a connected, or coupled, state, whereas the relative angle estimation may be done in a disconnected, or uncoupled, state.

Optionally, estimating the at least one of the first and second lengths may comprise assuming that the vehicle is formed according to a predefined geometrical shape, preferably shaped as a rectangular block. This implies a facilitated estimation. In particular, it has been realized that vehicle bodies, typically trailer bodies, are often shaped as a rectangular block. Thereby, by assuming that it is shaped like this, less processing power may be required. For example, it may thereby in some embodiments be assumed that outer edges of the vehicle, which may be opposing edges on a side of the vehicle, are of equal length.

Optionally, estimating the at least one of the first and second lengths may comprise assuming that the first and second vehicle portions are of equal length. For example, the first and second vehicle portions may be the above mentioned opposing edges.

Optionally, the method may further comprise obtaining dimension information about a distance between the first and second vehicle portions, wherein estimating the relative angle is further performed by using the obtained distance between the first and second vehicle portions in the second trigonometric model. Preferably, the first and second vehicle portions are offset from each other by a distance. For example, the distance may correspond to a distance between the above mentioned opposing edges, which for example may be vertically extending or horizontally extending portions as mentioned in the above.

Optionally, the first and second vehicle portions may be provided on a common side of the vehicle, such as on a front side thereof facing the image obtaining device when the image is obtained.

According to the invention, the image is a pixel image wherein each pixel is associated with a specific azimuth and/or altitude angle with respect to a reference, wherein determining the first and second distances to the first and second vehicle portions with respect to the image obtaining device comprises:

- in the first trigonometric model, using azimuth and/or altitude angles associated with end portions of the respective first and second vehicle portions, wherein a distance between the end portions of each vehicle portion corresponds to the length of each vehicle portion.

In addition, the first distance is determined by providing the first length and the first distance as sides in a first triangle with the azimuth and/or altitude angles. The second distance is determined in a similar manner, i.e. in a second triangle, but with the difference that it is instead based on the second vehicle portion and its length and on the azimuth and/or altitude angles associated with the second vehicle portion.

The triangles are provided in respective planes which are rotated relative each other with respect to a common rotation axis, preferably a rotation axis which is associated with the image obtaining device and from which the first and second distances are determined.

Still optionally, the second trigonometric model may thereby be a model in which the first and second distances are provided in a common plane which is perpendicular to the aforementioned rotation axis. For example, the respective planes for the first and second triangles may be vertically extending planes, whereby the common plane may be a horizontally extending plane. Alternatively, the respective planes for the first and second triangles may be horizontally extending planes, whereby the common plane may be a vertically extending plane.

Vertical and horizontal directions as used herein are defined as vertical and horizontal directions with respect to the vehicle when the vehicle is provided on a flat horizontally extending surface. Accordingly, the vertical direction may in an alternative embodiment also be denoted a height direction of the vehicle, whereby the horizontal direction may be a direction which extends in a plane defined by the longitudinal and a transverse direction of the vehicle.

According to a second aspect of the disclosure, the object is at least partly achieved by a system according to claim 9.

Thus, there is provided a system comprising an image obtaining device and a processing unit, wherein the processing unit is configured to estimate a relative angle between the image obtaining device and a vehicle, such as a trailer. The relative angle is defined by an angular difference between a first line related to the image obtaining device and a second longitudinal line extending in a longitudinal extension of the vehicle. The processing unit is configured to:

- obtain an image of the vehicle from the image obtaining device, wherein the image depicts at least a first and a second vehicle portion of the vehicle;
- obtain dimension information of the vehicle, wherein the dimension information comprises a first length of the first vehicle portion and a second length of the second vehicle portion,
- determine a first distance to the first vehicle portion with respect to the image obtaining device and a second distance to the second vehicle portion with respect to the image obtaining device, wherein the first and second distances are determined by use of the image, the first and second lengths and a first trigonometric model;
- by use of the first and second distances, the image and a second trigonometric model, estimate the relative angle between the image obtaining device and the vehicle.

Advantages and effects of the second aspect are largely analogous to the advantages and effects of the first aspect of the disclosure. It shall also be noted that all embodiments of the first aspect are combinable with all embodiments of the second aspect, and vice versa.

Optionally, the image obtaining device may be mounted on a second vehicle, such as on a truck, or on a static object, such as on a docking station for the vehicle, a building or the like, wherein the system is configured to perform the relative angle estimation when the vehicle is in a disengaged state with respect to the second vehicle or the static object. A disengaged state may be a disconnected, or uncoupled, state, and/or it may be a state when the vehicle is not in direct contact with e.g. the above mentioned docking station. For example, the image obtaining device may be provided at a distance from the vehicle when the relative angle estimation is performed, such as at a distance of 5, 10, 15, 20 meters or more from the vehicle.

According to a third aspect of the disclosure, the object is at least partly achieved by a second vehicle according to claim 11.

Thus, there is provided a second vehicle, such as a truck, comprising the system according to any one of the embodiments of the second aspect of the disclosure.

Advantages and effects of the third aspect are largely analogous to the advantages and effects of the first aspect of the disclosure. It shall also be noted that all embodiments of the first and second aspects are combinable with all embodiments of the third aspect, and vice versa.

According to a fourth aspect of the disclosure, the object is at least partly achieved by a method according to claim 12.

Thus, there is provided a method for docking an uncoupled vehicle to a second vehicle. The method comprises:

- determining a trajectory for the second vehicle defining a travelling path to the vehicle, wherein the trajectory is determined by use of at least one relative angle between the vehicle and the second vehicle, wherein the at least one relative angle is estimated by use of a method according to any one of the embodiments of the first aspect, and
- docking the vehicles by moving the second vehicle along the trajectory to the vehicle.

It has been realized that the relative angle estimation is particularly advantageous during a docking procedure between the second vehicle and the vehicle. In particular, the trajectory can be more efficiently determined by use of the relative angle estimation. In an embodiment, the trajectory is continuously or intermittently updated when the second vehicle is moving towards the vehicle, whereby the updated trajectory is based on an updated relative angle estimation which is performed according to an embodiment of the first aspect of the disclosure.

It shall also be noted that all embodiments of the first, second and third aspects are combinable with all embodiments of the fourth aspect, and vice versa.

According to a fifth aspect of the disclosure, the object is at least partly achieved by a computer program according to claim 13.

Thus, there is provided a computer program comprising program code means for performing the method of any of the embodiments of the first aspect and/or the fourth aspect when said program is run on a computer, such as on the processing unit of the system according to any one of the embodiments of the second aspect.

According to a sixth aspect of the disclosure, the object is at least partly achieved by a computer readable medium according to claim 14.

Thus, there is provided a computer readable medium carrying a computer program comprising program code means for performing the method of any of the embodiments of the first aspect and/or the fourth aspect when said program product is run on a computer, such as on the processing unit of the system according to any one of the embodiments of the second aspect.

Further advantages and advantageous features of the disclosure are disclosed in the following description and in the dependent claims.

BRIEF DESCRIPTION OF THE DRAWINGS

With reference to the appended drawings, below follows a more detailed description of embodiments of the disclosure cited as examples.

In the drawings:

Fig. 1 is a schematic view from above of a vehicle and a second vehicle where a system according to an embodiment of the disclosure is utilized,

Fig. 2 is a perspective and schematic view of a vehicle in an image obtained by an image obtaining device according to an embodiment of the disclosure,

Figs. 3a and b are schematic plane views of an image obtaining device which determines a first and a second distance according to an example embodiment of a method of the disclosure,

Fig. 4 is another schematic plane view of a common plane for the first and second distances in which a relative angle is estimated according to an example embodiment of a method of the disclosure,

Fig. 5 is a schematic view of a system according to an embodiment of the disclosure,

Fig. 6 is a side view of a second vehicle according to an embodiment of the disclosure, and

Figs. 7a-b are flowcharts of methods according to example embodiments of the disclosure.

The drawings show diagrammatic exemplifying embodiments of the present disclosure and are thus not necessarily drawn to scale. It shall be understood that the embodiments shown and described are exemplifying and that the disclosure is not limited to these embodiments. It shall also be noted that some details in the drawings may be exaggerated in order to better describe and illustrate the disclosure. Like reference characters refer to like elements throughout the description, unless expressed otherwise.

DETAILED DESCRIPTION OF EXAMPLE EMBODIMENTS OF THE DISCLOSURE

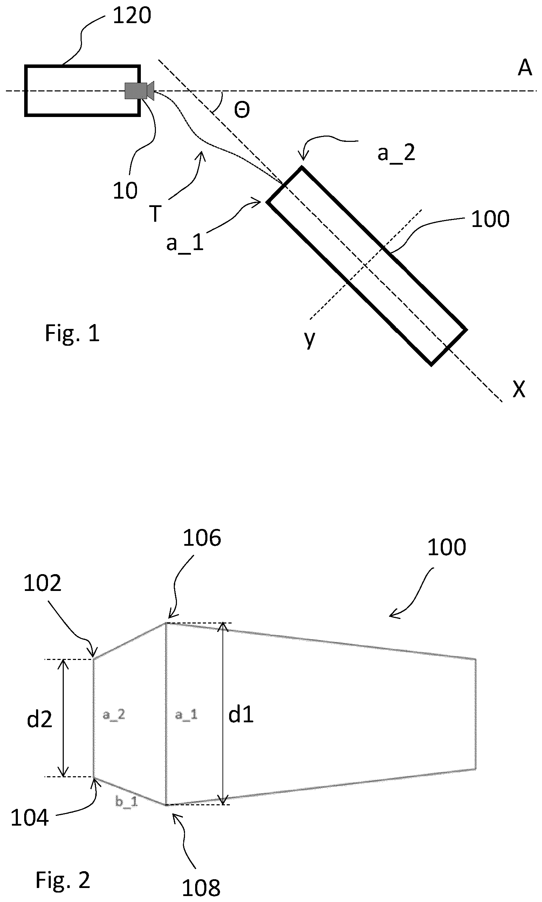

Fig. 1 depicts a schematic view from above of a vehicle 100 and a second vehicle 120 comprising an image obtaining device 10. The vehicle 100 is here a trailer which can be coupled to the second vehicle 120. More specifically, the second vehicle 120 as shown in fig. 1 represents a towing truck which is adapted to tow the trailer 100 when the towing truck 120 and the trailer 100 are coupled via an articulation joint (not shown).

The image obtaining device 10 may be any type of environment perception sensor which can obtain an image of the surrounding environment. For example, the image obtaining device 10 may be a camera, a light detection and ranging (LIDAR) sensor and a radio detection and ranging (RADAR) sensor.

As further shown, a first line A is related to the image obtaining device 10. The line A does here extend in an image obtaining direction which is directed straight out from the image obtaining device 10. The vehicle 100 extends in a longitudinal extension along a second longitudinal line X and in a transverse direction y which is perpendicular to the longitudinal extension. Thereby, as shown, a relative angle Θ between the image obtaining device 10 and the vehicle 100 may be defined as an angular difference between the line A and the second longitudinal line X.

Fig. 2 depicts a perspective view of the vehicle 100 as shown in fig. 1. The view represents an image which has been obtained by the image obtaining device 10 in fig. 1.

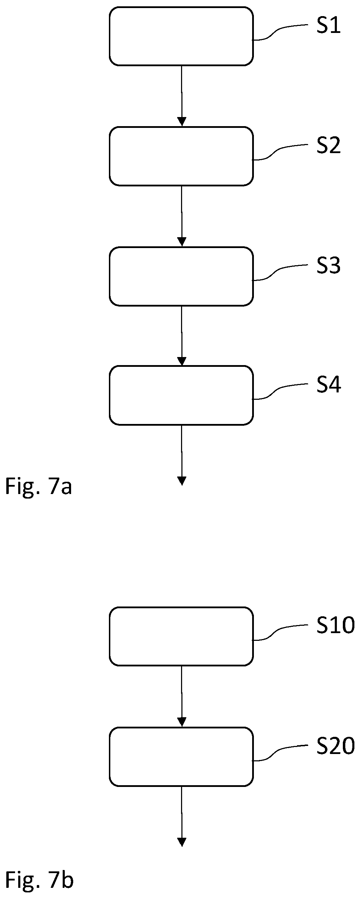

With reference to figs. 1-4, a method according to an example embodiment of the first aspect will be described. Reference is also made to fig. 7a which depicts a flowchart of the method.

The method is a method for estimating the relative angle Θ between the image obtaining device 10 and the vehicle 100 as shown in fig. 1.

The method comprises:

S1: obtaining an image of the vehicle 100 from the image obtaining device 10, wherein the image depicts at least a first and a second vehicle portion a_1, a_2 of the vehicle 100. As shown, the first and second vehicle portions a_1, a_2, may be outer edges of the vehicle 100. Accordingly, the outer edges may be part of respective corner areas of the vehicle 100. More particularly, the outer edges are here provided on opposite sides of a front side of the trailer 100 which faces the image obtaining device 10. Furthermore, as shown, the outer edges a_1, a_2 may be vertically extending edges, as seen when the vehicle 100 is provided on a flat horizontally extending surface.

The method further comprises:

S2: obtaining dimension information of the vehicle 100, wherein the dimension information comprises a first length d1 of the first vehicle portion a_1 and a second length d2 of the second vehicle portion a_2.

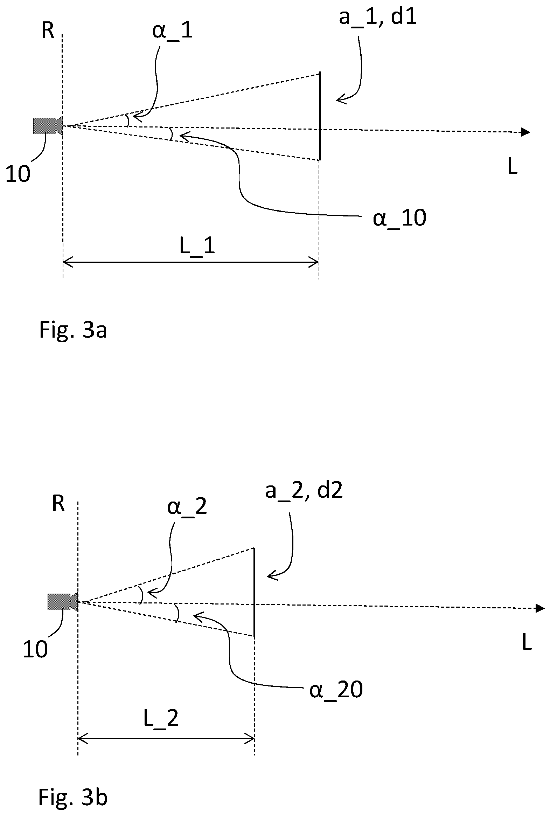

With reference to especially figs. 3a-b, the method further comprises:

S3: determining a first distance L_1 to the first vehicle portion a_1 with respect to the image obtaining device 10 and a second distance L_2 to the second vehicle portion a_2 with respect to the image obtaining device 10, wherein the first and second distances L_1, L_2 are determined by use of the image, the first and second lengths d1, d2 and a first trigonometric model.

Figs. 3a-b depict respective plane views, or respective planes, which are rotated relative each other with respect to a common rotation axis R. The respective planes are defined by the rotation axis R, i.e. the rotation axis R extends in each plane. The rotation axis R is associated with the image obtaining device 10 and is perpendicular to a plane defined by the first line A and the second longitudinal line X as shown in fig. 1. Each respective plane intersects one of the first and second vehicle portions a_1, a_2. Accordingly, the rotation axis R may be a vertical line, as seen when the vehicle 100 and the second vehicle 120 are provided on a flat horizontally extending surface. As such, each one of the respective planes may be vertically extending planes.

The axis L as shown in figs. 3a-b represents a length from the image obtaining device 10 in the direction towards the vehicle 100.

The first trigonometric model may thereby be based on a first triangle and a second triangle as shown in figs. 3a-b. Accordingly, in the shown embodiment, the first distance L_1 to the first vehicle portion a_1 with respect to the image obtaining device 10 is determined by the first length d1 and by angles $\alpha\_1$ and $\alpha\_10$ of the first triangle. In a similar manner, the second distance L_2 to the second vehicle portion a_2 with respect to the image obtaining device 10 is determined by the second length d2 and by angles $\alpha\_2$ and $\alpha\_20$.

For example, the first distance L_1 may be determined by the following equation:

$$L\_1 = ((1 / (1 + \tan(\alpha\_10)/\tan(\alpha\_1))) * d1) / \tan(\alpha\_1)$$

If for example $\alpha\_1$ is zero, the first distance L_1 may be determined by the following equation:

$$L = d1 / \tan(\alpha\_10)$$

The equations for the second distance L_2 may be similar to the above equations, but with the values $\alpha\_2$, $\alpha\_20$ and d2 used instead.

The angles $\alpha\_1$, $\alpha\_10$, $\alpha\_2$ and $\alpha\_20$ are here altitude angles which may be determined from the obtained image.

As such, by way of example, the image may be a pixel image wherein each pixel is associated with a specific azimuth and/or altitude angle with respect to a reference, in this case the line L, wherein determining the first and second distances L_1, L_2 to the first and second vehicle portions a_1, a_2 with respect to the image obtaining device 10 comprises:

- in the first trigonometric model, using azimuth and/or altitude angles $\alpha\_1$, $\alpha\_10$, $\alpha\_2$, $\alpha\_20$ associated with end portions 102, 104 and 106, 108, of the respective first and second vehicle portions a_1, a_2, wherein a distance between the end portions of each vehicle portion a_1, a_2 corresponds to the length d1, d2 of each vehicle portion a_1, a_2.

Accordingly, the first distance L_1 may be determined by providing the first length d1 and the first distance L_1 as sides in the first triangle with the altitude angles $\alpha\_1$, $\alpha\_10$. The second distance d2 may thus be determined in a similar manner, i.e. in the second triangle, but with the difference that it is instead based on the second vehicle portion a_2 and its length d2 and on the azimuth and/or altitude angles $\alpha\_2$ and $\alpha\_20$ associated with the second vehicle portion a_2.

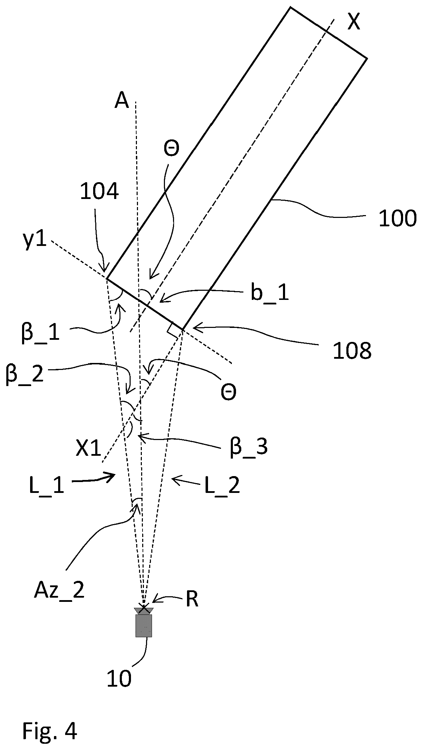

With respect to especially fig. 4, the method further comprises:

S4: by use of the first and second distances L_1, L_2, the image and a second trigonometric model, estimating the relative angle Θ between the image obtaining device 10 and the vehicle 100.

For example, as shown in fig. 4, the second trigonometric model may thereby be a model in which the first and second distances L_1, L_2 are provided in a common plane which is perpendicular to the aforementioned rotation axis R. For example, as shown in figs. 3a-b, the respective planes for the first and second triangles may be vertically extending planes, whereby the common plane may be a horizontally extending plane. Alternatively, the respective planes for the first and second triangles may be horizontally extending planes, whereby the common plane may be a vertically extending plane.

By use of the above mentioned pixel image, the method may further comprise:

- in the second trigonometric model, using azimuth angles $\beta\_1$, $\beta\_2$, $\beta\_3$, Az_2 and/or altitude angles associated with end portions 104, 108, of the respective first and second vehicle portions a_1, a_2 to estimate the relative angle Θ.

As shown, the azimuth angle $\beta\_1$ may be an angle between the line L_2 and a line y1 at the front end of the vehicle 100 extending in the transverse direction y. The azimuth angles $\beta\_2$ and $\beta\_3$ may be angles between the line L_2 and a longitudinal line X1 extending in the longitudinal extension. The line X1 is here a line which also intersects the second vehicle portion a_2. In this case the second vehicle portion a_2 is closer to the image obtaining device 10 than the first vehicle portion a_1. As shown, the angles $\beta\_2$ and $\beta\_3$ are provided on opposite sides of the line X1, i.e. they are together 180 degrees or Pi radians. The angle Az_2 may as shown be an angle between the line L_2 and the line A.

Thereby, by way of example, the relative angle Θ may be estimated by the following equations:

$$\beta\_1 = \arccos((b\_1^2 + L\_2^2 - L\_1^2) / 2*b\_1*L\_2),$$

$$\beta\_2 = pi/2 - \beta\_1,$$

$$\beta\_3 = pi - \beta\_2,$$

$$\Theta = pi - \beta\_3 - Az\_2$$

It shall be noted that this is one example of where azimuth and altitude angles from the pixel image have been used to estimate the relative angle Θ. However, also other angles may be used in order to estimate the relative angle Θ.

The term b_1 used in the above equations relates to a horizontally extending vehicle portion, in this case an outer edge of the front end of the vehicle 100 which extends between the first and second vehicle portions a_1, a_2. The length, or distance, of b_1 may for example be retrieved from the obtained dimension information as disclosed herein.

Obtaining dimension information of the vehicle 100 may comprise estimating at least one of the first and second lengths d1, d2 of the first and second vehicle portions a_1, a_2, and/or it may comprise estimating the length of the horizontally extending portion b_1.

For example, the estimation may be based on at least one of information from the image, manual input from an operator, input from a database, and sensor information from one or more sensors which have observed the vehicle 100 during driving of the vehicle 100.

Still further, estimating the at least one of the first and second lengths d1, d2 may comprise assuming that the vehicle 100 is formed according to a predefined geometrical shape, preferably a shaped as a rectangular block as shown in fig. 2. For example, it may be

assumed that the first and second vehicle portions a_1, a_2 are of equal length since for example a trailer body is most often formed in this way. For example, the estimation of the first and second lengths d1, d2 may be based on an assumption that the vehicle has a certain width, corresponding to the distance b_1. More specifically, a trailer most often has a standard width, and by using this standard width, the lengths d1, d2 may be obtained from the image by making a relative comparison in the image of b_1 with any one of d1, d2. For example, it may be assumed that b_1 is about 2.5 meters.

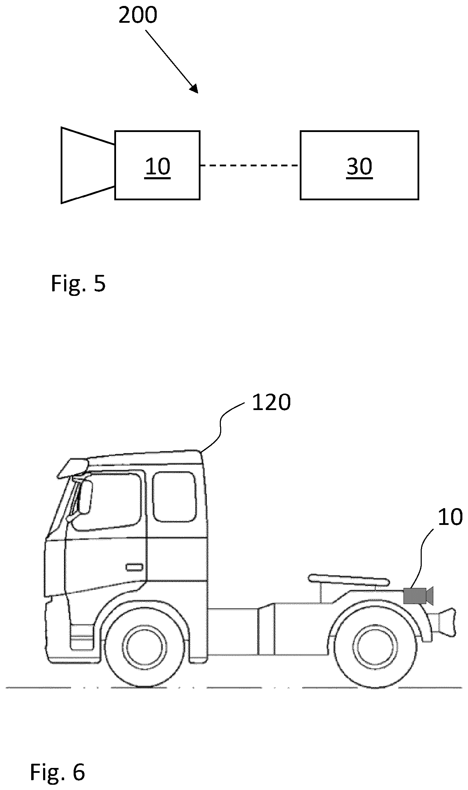

With reference to especially fig. 5, a system 200 is depicted which comprises an image obtaining device 10 and a processing unit 30. The processing unit 30 is configured to estimate a relative angle Θ between the image obtaining device 10 and a vehicle 100, such as a trailer, wherein the relative angle Θ is defined by an angular difference between a first line A related to the image obtaining device 10 and a second longitudinal line X extending in a longitudinal extension of the vehicle 100. The processing unit 30 is configured to:

- obtain an image of the vehicle 100 from the image obtaining device 10, wherein the image depicts at least a first and a second vehicle portion a_1, a_2 of the vehicle 100;
- obtain dimension information of the vehicle 100, wherein the dimension information comprises a first length d1 of the first vehicle portion a_1 and a second length d2 of the second vehicle portion a_2,
- determine a first distance L_1 to the first vehicle portion a_1 with respect to the image obtaining device 10 and a second distance L_2 to the second vehicle portion a_2 with respect to the image obtaining device 10, wherein the first and second distances L_1, L_2 are determined by use of the image, the first and second lengths d1, d2 and a first trigonometric model; and
- by use of the first and second distances L_1, L_2, the image and a second trigonometric model, estimate the relative angle Θ between the image obtaining device 10 and the vehicle 100.

The processing unit 30 may be any kind of processing unit, such as a processing unit comprising hardware or hardware and software for performing a method according to any one of the embodiments of the disclosure. The processing unit 30 may be a one single piece processing unit or it may be formed by several sub-processing units. The processing unit 30 may be adapted to communicate with the image obtaining device 10 by use of wired and/or wireless communication means. It may be an on-board processing unit provided on-board e.g. the second vehicle 120 as disclosed herein and/or it may be an off-board processing unit which is adapted to receive signals from and/or communicate with the image obtaining device 10. Furthermore, the processing unit 30 may utilize a computer program and/or computer readable medium as disclosed herein.

As mentioned in the above, the image obtaining device 10 may be mounted on the second vehicle 120. Alternatively, it may also be mounted on a static object, such as on a docking station for the vehicle 100, a building or the like. Furthermore, the system 200 may be configured to perform the relative angle estimation when the vehicle 100 is in a disengaged state with respect to the second vehicle 120 or the static object.

With reference to fig. 6, the second vehicle 120 is shown in a side view. The second vehicle 120 as shown in fig. 6 comprises the system 200 (not shown in fig. 6), including the image obtaining device 10, according to any one of the embodiments disclosed herein.

With reference to especially figs. 7b and 1, a method for docking an uncoupled vehicle 100 to a second vehicle 120 will be described. The method comprises:

S10: determining a trajectory T for the second vehicle 120 defining a travelling path to the vehicle 100. The travelling path is here a travelling path to a coupling device (not shown) of the vehicle 100. For example, the coupling device may be a kingpin of a semitrailer or a coupling arm of a dolly unit or trailer.

The trajectory T is determined by use of at least one relative angle Θ between the vehicle 100 and the second vehicle 120, wherein the at least one relative angle Θ is estimated by use of a method according to any one of embodiments of the first aspect of the disclosure.

The method further comprises:

S20: docking the vehicles 120, 100 by moving the second vehicle 120 along the trajectory T to the vehicle 100.

The method may further comprise:

- determining the trajectory T by also determining a distance to the vehicle 100. The distance may for example be any one of L_1 or L_2. Additionally, or alternatively, the distance may be a distance to the above mentioned coupling device. The distance to the coupling device may be determined in a similar manner as the distances L_1, L_2, e.g. by use of a trigonometric model, the image and by obtained dimension information of the vehicle 100.

The system 200 may be configured to also perform the method as shown in fig. 7b, i.e. a method according to the fourth aspect. As such, by way of example, the system 200 may further be configured to send control signals to one or more movement actuators of the second vehicle 120 for moving the second vehicle 120, and/or the system 200 may be configured to send control signals to another control unit (not shown) which is configured to control the movement of the second vehicle 120. Movement actuators may for example be actuators for controlling at least one of steering, propulsion and braking of the second vehicle 120.

Furthermore, the method may alternatively determine a trajectory for the vehicle 100 defining a travelling path to another entity, such as to a docking station, wherein the trajectory T is determined by use of at least one relative angle Θ between the vehicle 100 and the other entity, wherein the at least one relative angle Θ is estimated by use of a method according to any one of embodiments of the first aspect of the disclosure.

Accordingly, the method may further comprise:

- docking the vehicles 100 by moving the vehicle 100 along the trajectory T to the other entity.

Even though it has been stated in the above that the system 200 may be provided on the second vehicle 120, in another embodiment the system 200 may be provided on the vehicle 100 instead or on the other entity, such as on the above mentioned docking station.

It is to be understood that the present disclosure is not limited to the embodiments described above and illustrated in the drawings; rather, the skilled person will recognize that many changes and modifications may be made within the scope of the appended claims.

## Claims

1. A method for estimating a relative angle ($\Theta$) between an image obtaining device (10) and a vehicle (100), such as a trailer, wherein the relative angle ($\Theta$) is defined by an angular difference between a first line (A) related to the image obtaining device (10) and a second longitudinal line (X) extending in a longitudinal extension of the vehicle (100), the method comprising:

   - obtaining an image of the vehicle (100) from the image obtaining device (10), wherein the image depicts at least a first and a second vehicle portion ($a\_1$, $a\_2$) of the vehicle (100);
   - obtaining dimension information of the vehicle (100), wherein the dimension information comprises a first length (d1) of the first vehicle portion ($a\_1$) and a second length (d2) of the second vehicle portion ($a\_2$),
   - determining a first distance ($L\_1$) to the first vehicle portion ($a\_1$) with respect to the image obtaining device (10) and a second distance ($L\_2$) to the second vehicle portion ($a\_2$) with respect to the image obtaining device (10), wherein the first and second distances ($L\_1$, $L\_2$) are determined by use of the image, the first and second lengths (d1, d2) and a first trigonometric model;
   - by use of the first and second distances ($L\_1$, $L\_2$), the image and a second trigonometric model, estimating the relative angle ($\Theta$) between the image obtaining device (10) and the vehicle (100), wherein the image is a pixel image and wherein each pixel is associated with a specific azimuth and/or altitude angle with respect to a reference, wherein determining the first and second distances ($L\_1$, $L\_2$) to the first and second vehicle portions ($a\_1$, $a\_2$) with respect to the image obtaining device (10) comprises:
   - in the first trigonometric model, using azimuth and/or altitude angles ($\alpha\_1$, $\alpha\_10$, $\alpha\_2$, $\alpha\_20$) associated with end portions (102, 104; 106, 108) of the respective first and second vehicle portions ($a\_1$, $a\_2$), wherein a distance between the end portions (102, 104; 106, 108) of each vehicle portion ($a\_1$, $a\_2$) corresponds to the length (d1, d2) of each vehicle portion ($a\_1$, $a\_2$), **characterized in that**,

   the first distance ($L\_1$) is determined by providing the first length (d1) and the first distance ($L\_1$) as sides in a first triangle with the azimuth and/or altitude angles and the second distance ($L\_2$) is determined by providing the second length (d2) and the second distance ($L\_2$) as sides in a second triangle with the azimuth and/or altitude angles, wherein the first and second triangles are provided in respective planes which are rotated relative each other with respect to a common rotation axis (R).

2. The method according to claim 1, wherein the first vehicle portion ($a\_1$) is a vertically or horizontally extending portion of the vehicle (100) and wherein the second vehicle portion ($a\_2$) is a vertically or horizontally extending portion of the vehicle (100), preferably the first and second vehicle portions (a1, a2) are outer edges of the vehicle (100).

3. The method according to any one of the preceding claims, wherein obtaining dimension information of the vehicle comprises estimating at least one of the first and second lengths (d1, d2) of the first and second vehicle portions ($a\_1$, $a\_2$).

4. The method according to claim 3, wherein the estimation is based on at least one of information from the image, manual input from an operator, input from a database, and sensor information from one or more sensors which have observed the vehicle (100) during driving of the vehicle (100).

5. The method according to any one of claims 3-4, wherein estimating the at least one of the first and second lengths (d1, d2) comprises assuming that the vehicle (100) is formed according to a predefined geometrical shape, preferably shaped as a rectangular block.

6. The method according to any one of claims 3-5, wherein estimating the at least one of the first and second lengths (d1, d2) comprises assuming that the first and second vehicle portions (a_1, a_2) are of equal length.

7. The method according to any one of the preceding claims, further comprising obtaining dimension information about a distance (b_1) between the first and second vehicle portions (a_1, a_2), wherein estimating the relative angle (Θ) is further performed by using the obtained distance (b_1) between the first and second vehicle portions (a_1, a_2) in the second trigonometric model.

8. The method according to any one of the preceding claims, wherein the first and second vehicle portions (a_1, a_2) are provided on a common side of the vehicle (100), such as on a front side thereof facing the image obtaining device (10) when the image is obtained.

9. A system (200) comprising an image obtaining device (10) and a processing unit (30), wherein the processing unit (30) is configured to estimate a relative angle (Θ) between the image obtaining device (10) and a vehicle (100), such as a trailer, wherein the relative angle (Θ) is defined by an angular difference between a first line (A) related to the image obtaining device (10) and a second longitudinal line (X) extending in a longitudinal extension of the vehicle (100), the processing unit (30) being configured to:

   - obtain an image of the vehicle (100) from the image obtaining device (10), wherein the image depicts at least a first and a second vehicle portion (a_1, a_2) of the vehicle (100);
   - obtain dimension information of the vehicle (100), wherein the dimension information comprises a first length (d1) of the first vehicle portion (a_1) and a second length (d2) of the second vehicle portion (a_2),
   - determine a first distance (L_1) to the first vehicle portion (a_1) with respect to the image obtaining device (10) and a second distance (L_2) to the second vehicle portion (a_2) with respect to the image obtaining device (10), wherein the first and second distances (L_1, L_2) are determined by use of the image, the first and second lengths (d1, d2) and a first trigonometric model;
   - by use of the first and second distances (L_1, L_2), the image and a second trigonometric model, estimate the relative angle (Θ) between the image obtaining device (10) and the vehicle (100) wherein the image is a pixel image and wherein each pixel is associated with a specific azimuth and/or altitude angle with respect to a reference, wherein determine the first and second distances (L_1, L_2) to the first and second vehicle portions (a_1, a_2) with respect to the image obtaining device (10) comprises:
   - in the first trigonometric model, use azimuth and/or altitude angles (α_1, α_10, α_2, α_20) associated with end portions (102, 104; 106, 108) of the respective first and second vehicle portions (a_1, a_2), wherein a distance between the end portions (102, 104; 106, 108) of each vehicle portion (a_1, a_2) corresponds to the length (d1, d2) of each vehicle portion (a_1, a_2), **characterized in that**,

   the first distance (L_1) is determined by providing the first length (d1) and the first distance (L_1) as sides in a first triangle with the azimuth and/or altitude angles and the second distance (L_2) is determined by providing the second length (d2) and the second distance (L_2) as sides in a second triangle with the azimuth and/or altitude angles, wherein the first and second triangles are provided in respective planes which are rotated relative each other with respect to a common rotation axis (R).

10. The system (200) according to claim 9, wherein the image obtaining device (10) is mounted on a second vehicle (120), such as on a truck, or on a static object, such as on a docking station for the vehicle (100), a building or the like, wherein the system is configured to perform the relative angle estimation when the vehicle (100) is in a disengaged state with respect to the second vehicle (120) or the static object.

11. A second vehicle (120), such as a truck, comprising the system according to any one of claims 9-10.

12. A method for docking an uncoupled vehicle (100) to a second vehicle (120), comprising:

   - determining a trajectory (T) for the second vehicle (120) defining a travelling path to the vehicle (100), wherein the trajectory (T) is determined by use of at least one relative angle (Θ) between the vehicle and the second vehicle, wherein the at least one relative angle (Θ) is estimated by use of a method according to any one of claims 1-8; and
   - docking the vehicles by moving the second vehicle (120) along the trajectory (T) to the vehicle (100).

**13.** A computer program comprising program code means for performing the method of any of claims 1-8 and/or 12 when said program is run on a computer, such as on the processing unit of the system according to any one of claims 9-10.

**14.** A computer readable medium carrying a computer program comprising program code means for performing the method of any of claims 1-8 and/or 12 when said program product is run on a computer, such as on the processing unit of the system according to any one of claims 9-10.


**Patentansprüche**

**1.** Verfahren zur Schätzung eines relativen Winkels ($\Theta$) zwischen einer Bildaufnahmevorrichtung (10) und einem Fahrzeug (100), wie z.B. einem Anhänger, wobei der relative Winkel ($\Theta$) durch eine Winkeldifferenz zwischen einer ersten Linie (A), die sich auf die Bildaufnahmevorrichtung (10) bezieht, und einer zweiten Längslinie (X), die sich in einer Längserstreckung des Fahrzeugs (100) erstreckt, definiert ist, das Verfahren umfassend:

- Erhalten eines Bildes des Fahrzeugs (100) von der Bildaufnahmevorrichtung (10), wobei das Bild mindestens einen ersten und einen zweiten Fahrzeugabschnitt (a_1, a_2) des Fahrzeugs (100) darstellt;
- Erhalten von Abmessungsinformationen des Fahrzeugs (100), wobei die Abmessungsinformationen eine erste Länge (d1) des ersten Fahrzeugabschnitts (a_1) und eine zweite Länge (d2) des zweiten Fahrzeugabschnitts (a_2) umfassen,
- Bestimmen eines ersten Abstands (L_1) zu dem ersten Fahrzeugabschnitt (a_1) in Bezug auf die Bildaufnahmevorrichtung (10) und eines zweiten Abstands (L_2) zu dem zweiten Fahrzeugabschnitt (a_2) in Bezug auf die Bildaufnahmevorrichtung (10), wobei der erste und der zweite Abstand (L_1, L_2) unter Verwendung des Bildes, der ersten und der zweiten Länge (d1, d2) und eines ersten trigonometrischen Modells bestimmt werden;
- unter Verwendung der ersten und zweiten Abstände (L_1, L_2), des Bildes und eines zweiten trigonometrischen Modells, Schätzen des relativen Winkels ($\Theta$) zwischen der Bildaufnahmevorrichtung (10) und dem Fahrzeug (100), wobei das Bild ein Pixelbild ist und wobei jedes Pixel mit einem spezifischen Azimut- und/oder Höhenwinkel in Bezug auf eine Referenz verbunden ist, wobei das Bestimmen der ersten und zweiten Abstände (L_1, L_2) zu den ersten und zweiten Fahrzeugabschnitten (a_1, a_2) in Bezug auf die Bildaufnahmevorrichtung (10) umfasst:
- in dem ersten trigonometrischen Modell unter Verwendung von Azimut- und/oder Höhenwinkeln ($\alpha_1$, $\alpha_{10}$, $\alpha_2$, $\alpha_{20}$), die mit Endabschnitten (102, 104; 106, 108) des jeweiligen ersten und zweiten Fahrzeugabschnitts (a_1, a_2) verbunden sind, wobei ein Abstand zwischen den Endabschnitten (102, 104; 106, 108) jedes Fahrzeugabschnitts (a_1, a_2) der Länge (d1, d2) jedes Fahrzeugabschnitts (a_1, a_2) entspricht, **dadurch gekennzeichnet, dass**

der erste Abstand (L_1) bestimmt wird, indem die erste Länge (d1) und der erste Abstand (L_1) als Seiten in einem ersten Dreieck mit den Azimut- und/oder Höhenwinkeln bereitgestellt werden, und der zweite Abstand (L_2) bestimmt wird, indem die zweite Länge (d2) und der zweite Abstand (L_2) als Seiten in einem zweiten Dreieck mit den Azimut- und/oder Höhenwinkeln bereitgestellt werden, wobei das erste und das zweite Dreieck in jeweiligen Ebenen bereitgestellt werden, die relativ zueinander in Bezug auf eine gemeinsame Rotationsachse (R) gedreht sind.

**2.** Verfahren nach Anspruch 1, wobei der erste Fahrzeugabschnitt (a_1) ein sich vertikal oder horizontal erstreckender Abschnitt des Fahrzeugs (100) ist und wobei der zweite Fahrzeugabschnitt (a_2) ein sich vertikal oder horizontal erstreckender Abschnitt des Fahrzeugs (100) ist, vorzugsweise der erste und der zweite Fahrzeugabschnitt (a1, a2) Außenkanten des Fahrzeugs (100) sind.

**3.** Verfahren nach einem der vorhergehenden Ansprüche, wobei das Erhalten von Abmessungsinformationen des Fahrzeugs die Schätzung von mindestens der ersten und/oder der zweiten Länge (d1, d2) des ersten und zweiten Fahrzeugabschnitts (a_1, a_2) umfasst.

**4.** Verfahren nach Anspruch 3, wobei die Schätzung auf mindestens einer der folgenden Informationen basiert: Informationen aus dem Bild, manuelle Eingaben von einem Bediener, Eingaben aus einer Datenbank und Sensorinformationen von einem oder mehreren Sensoren, die das Fahrzeug (100) während des Fahrens des Fahrzeugs (100) beobachtet haben.

**5.** Verfahren nach einem der Ansprüche 3-4, wobei die Schätzung der ersten und/oder der zweiten Länge (d1, d2) die Annahme umfasst, dass das Fahrzeug (100) gemäß einer vordefinierten geometrischen Form, vorzugsweise als rechteckiger Block, geformt ist.

6. Verfahren nach einem der Ansprüche 3-5, wobei die Schätzung der ersten und/oder der zweiten Länge (d1, d2) die Annahme umfasst, dass der erste und der zweite Fahrzeugabschnitt (a_1, a_2) gleich lang sind.

7. Verfahren nach einem der vorhergehenden Ansprüche, ferner umfassend das Erhalten von Abmessungsinformationen über einen Abstand (b_1) zwischen dem ersten und dem zweiten Fahrzeugabschnitt (a_1, a_2), wobei die Schätzung des relativen Winkels (Θ) ferner unter Verwendung des erhaltenen Abstands (b_1) zwischen dem ersten und dem zweiten Fahrzeugabschnitt (a_1, a_2) in dem zweiten trigonometrischen Modell durchgeführt wird.

8. Verfahren nach einem der vorhergehenden Ansprüche, wobei der erste und der zweite Fahrzeugabschnitt (a_1, a_2) auf einer gemeinsamen Seite des Fahrzeugs (100) vorgesehen sind, beispielsweise auf einer Vorderseite, die der Bildaufnahmevorrichtung (10) zugewandt ist, wenn das Bild aufgenommen wird.

9. System (200), umfassend eine Bildaufnahmevorrichtung (10) und eine Verarbeitungseinheit (30), wobei die Verarbeitungseinheit (30) konfiguriert ist, um einen relativen Winkel (Θ) zwischen der Bildaufnahmevorrichtung (10) und einem Fahrzeug (100), wie einem Anhänger, zu schätzen, wobei der relative Winkel (Θ) durch eine Winkeldifferenz zwischen einer ersten Linie (A), die sich auf die Bildaufnahmevorrichtung (10) bezieht, und einer zweiten Längslinie (X), die sich in einer Längserstreckung des Fahrzeugs (100) erstreckt, definiert ist, wobei die Verarbeitungseinheit (30) konfiguriert ist, zum:

- Erhalten eines Bildes des Fahrzeugs (100) von der Bildaufnahmevorrichtung (10), wobei das Bild mindestens einen ersten und einen zweiten Fahrzeugabschnitt (a_1, a_2) des Fahrzeugs (100) darstellt;
- Erhalten von Abmessungsinformationen des Fahrzeugs (100), wobei die Abmessungsinformationen eine erste Länge (d1) des ersten Fahrzeugabschnitts (a_1) und eine zweite Länge (d2) des zweiten Fahrzeugabschnitts (a_2) umfassen,
- Bestimmen eines ersten Abstands (L_1) zu dem ersten Fahrzeugabschnitt (a_1) in Bezug auf die Bildaufnahmevorrichtung (10) und eines zweiten Abstands (L_2) zu dem zweiten Fahrzeugabschnitt (a_2) in Bezug auf die Bildaufnahmevorrichtung (10), wobei der erste und der zweite Abstand (L_1, L_2) unter Verwendung des Bildes, der ersten und der zweiten Länge (d1, d2) und eines ersten trigonometrischen Modells bestimmt werden;
- unter Verwendung des ersten und zweiten Abstands (L_1, L_2), des Bildes und eines zweiten trigonometrischen Modells, Schätzen des relativen Winkels (Θ) zwischen der Bildaufnahmevorrichtung (10) und dem Fahrzeug (100), wobei das Bild ein Pixelbild ist und wobei jedes Pixel mit einem spezifischen Azimut- und/oder Höhenwinkel in Bezug auf eine Referenz verbunden ist, wobei das Bestimmen der ersten und zweiten Abstände (L_1, L_2) zu den ersten und zweiten Fahrzeugabschnitten (a_1, a_2) in Bezug auf die Bildaufnahmevorrichtung (10) umfasst:
- in dem ersten trigonometrischen Modell unter Verwendung von Azimut- und/oder Höhenwinkeln ($\alpha$_1, $\alpha$_10, $\alpha$_2, $\alpha$_20), die mit Endabschnitten (102, 104; 106, 108) des jeweiligen ersten und zweiten Fahrzeugabschnitts (a_1, a_2) verbunden sind, wobei ein Abstand zwischen den Endabschnitten (102, 104; 106, 108) jedes Fahrzeugabschnitts (a_1, a_2) der Länge (d1, d2) jedes Fahrzeugabschnitts (a_1, a_2) entspricht, **dadurch gekennzeichnet, dass**

der erste Abstand (L_1) bestimmt wird, indem die erste Länge (d1) und der erste Abstand (L_1) als Seiten in einem ersten Dreieck mit den Azimut- und/oder Höhenwinkeln bereitgestellt werden, und der zweite Abstand (L_2) bestimmt wird, indem die zweite Länge (d2) und der zweite Abstand (L_2) als Seiten in einem zweiten Dreieck mit den Azimut- und/oder Höhenwinkeln bereitgestellt werden, wobei das erste und das zweite Dreieck in jeweiligen Ebenen bereitgestellt werden, die relativ zueinander in Bezug auf eine gemeinsame Rotationsachse (R) gedreht sind.

10. System (200) nach Anspruch 9, wobei die Bildaufnahmevorrichtung (10) an einem zweiten Fahrzeug (120), wie z.B. an einem Lastwagen oder an einem statischen Objekt, wie z.B. an einer Andockstation für das Fahrzeug (100), einem Gebäude oder dergleichen, angebracht ist, wobei das System konfiguriert ist, um die relative Winkelschätzung durchzuführen, wenn sich das Fahrzeug (100) in Bezug auf das zweite Fahrzeug (120) oder das statische Objekt in einem entkoppelten Zustand befindet.

11. Zweites Fahrzeug (120), wie z.B. ein Lastwagen, das das System nach einem der Ansprüche 9-10 umfasst.

12. Verfahren zum Andocken eines abgekoppelten Fahrzeugs (100) an ein zweites Fahrzeug (120), umfassend:

- Bestimmen einer Trajektorie (T) für das zweite Fahrzeug (120), die einen Fahrweg zu dem Fahrzeug (100) definiert, wobei die Trajektorie (T) unter Verwendung mindestens eines relativen Winkels (Θ) zwischen dem Fahrzeug und dem zweiten Fahrzeug bestimmt wird, wobei der mindestens eine relative Winkel (Θ) unter Verwendung eines Verfahrens nach einem der Ansprüche 1-8 geschätzt wird; und
- Andocken der Fahrzeuge durch Bewegen des zweiten Fahrzeugs (120) entlang der Trajektorie (T) an das Fahrzeug (100).

13. Computerprogramm mit Programmcodemitteln zur Durchführung des Verfahrens nach einem der Ansprüche 1-8 und/oder 12, wenn das Programm auf einem Computer, beispielsweise auf der Verarbeitungseinheit des Systems nach einem der Ansprüche 9-10, ausgeführt wird.

14. Computerlesbares Medium mit einem Computerprogramm, das Programmcodemittel zur Durchführung des Verfahrens nach einem der Ansprüche 1-8 und/oder 12 umfasst, wenn das Programmprodukt auf einem Computer, wie z.B. auf der Verarbeitungseinheit des Systems nach einem der Ansprüche 9-10, ausgeführt wird.

**Revendications**

1. Procédé d'estimation d'un angle relatif (Θ) entre un dispositif d'obtention d'images (10) et un véhicule (100), tel qu'une remorque, dans lequel l'angle relatif (Θ) est défini par une différence angulaire entre une première ligne (A) liée au dispositif d'obtention d'images (10) et une seconde ligne longitudinale (X) s'étendant dans une extension longitudinale du véhicule (100), le procédé comprenant :

   - l'obtention d'une image du véhicule (100) à partir du dispositif d'obtention d'images (10), l'image représentant au moins une première et une seconde parties de véhicule (a_1, a_2) du véhicule (100) ;
   - l'obtention d'informations de dimension du véhicule (100), les informations de dimension comprenant une première longueur (d1) de la première partie de véhicule (a_1) et une seconde longueur (d2) de la seconde partie de véhicule (a_2),
   - la détermination d'une première distance (L_1) de la première partie de véhicule (a_1) par rapport au dispositif d'obtention d'images (10) et d'une seconde distance (L_2) de la seconde partie de véhicule (a_2) par rapport au dispositif d'obtention d'images (10), les première et seconde distances (L_1, L_2) étant déterminées en utilisant l'image, les première et seconde distances (L_1, L_2) étant déterminée en utilisant l'image, les première et seconde longueurs (d1, d2) et un premier modèle trigonométrique ;
   - en utilisant les première et seconde distances (L_1, L_2), l'image et un second modèle trigonométrique, estimant l'angle relatif (Θ) entre le dispositif d'obtention d'images (10) et le véhicule (100), l'image étant une image en pixels et chaque pixel étant associé à un azimut spécifique et/ou un angle d'altitude par rapport à une référence, la détermination des première et seconde distances (L_1, L_2) par rapport à la première et à la seconde partie de véhicule (a_1, a_2) par rapport au dispositif d'obtention d'images (10) comprenant :
   - dans le premier modèle trigonométrique, l'utilisation d'angles d'azimut et/ou d'altitude (α_1, α_10, α_2, α20) associés à des parties terminales (102, 104 ; 106, 108) des première et seconde parties de véhicule (a_1, a_2) respectives, une distance entre les parties terminales (102, 104 ; 106, 108) de chaque partie de véhicule (a_1, a_2) correspondant à la longueur (d1, d2) de chaque partie de véhicule (a_1, a 2), caractérisée en ce qui suit

   la première distance (L_1) est déterminée en prévoyant la première longueur (d1) et la première distance (L_1) en tant que côtés d'un premier triangle avec les angles d'azimut et/ou d'altitude, et la seconde distance (L_2) est déterminée en prévoyant la seconde longueur (d2) et la seconde distance (L_2) en tant que côtés d'un second triangle avec les angles d'azimut et/ou d'altitude, les premier et second triangles étant prévus dans des plans relatifs qui tournent mutuellement par rapport à un axe de rotation commun (R).

2. Procédé selon la revendication 1, dans lequel la première partie de véhicule (a_1) est une partie s'étendant verticalement ou horizontalement du véhicule (100) et la seconde partie de véhicule (a_2) est une partie s'étendant verticalement ou horizontalement du véhicule (100), les première et seconde parties de véhicule (al, a2) étant de préférence des bords extérieurs du véhicule (100).

3. Procédé selon l'une quelconque des revendications précédentes, dans lequel l'obtention d'informations de dimension du véhicule comprend l'estimation d'au moins l'une des première et seconde longueurs (d1, d2) des première et seconde parties de véhicule (a_1, a_2).

4. Procédé selon la revendication 3, dans lequel l'estimation est basée sur au moins l'une d'une information provenant de l'image, d'une entrée manuelle d'un opérateur, d'une entrée d'une base de données, et d'une information de capteur provenant d'un ou plusieurs capteurs qui ont observé le véhicule (100) pendant la conduite du véhicule (100).

5. Procédé selon l'une quelconque des revendications 3 à 4, dans lequel l'estimation de l'au moins une des première et seconde longueurs (d1, d2) comprend l'hypothèse que le véhicule (100) est formé selon une forme géométrique prédéfinie, de préférence sous la forme d'un bloc rectangulaire.

6. Procédé selon l'une quelconque des revendications 3 à 5, dans lequel l'estimation de l'au moins une des première et seconde longueurs (d1, d2) comprend l'hypothèse que les première et seconde parties de véhicule (a_1, a_2) sont de longueur égale.

7. Procédé selon l'une quelconque des revendications précédentes, comprenant en outre des informations de dimension concernant une distance (b_1) entre les première et seconde parties de véhicule (a_1, a_2), l'estimation de l'angle relatif ($\Theta$) étant en outre effectuée en utilisant la distance obtenue (b_1) entre les première et seconde parties de véhicule (a_1, a_2) dans le second modèle trigonométrique.

8. Procédé selon l'une quelconque des revendications précédentes, dans lequel les première et seconde parties de véhicule (a_1, a_2) sont prévues sur un côté commun du véhicule (100), tel que sur un côté avant de celui-ci faisant face au dispositif d'obtention d'images (10) lorsque l'image est obtenue.

9. Système (200) comprenant un dispositif d'obtention d'images (10) et une unité de traitement (30), dans lequel l'unité de traitement (30) étant configurée pour estimer un angle relatif ($\Theta$) entre le dispositif d'obtention d'images (10) et un véhicule (100), tel qu'une remorque, l'angle relatif ($\Theta$) étant défini par une différence angulaire entre une première ligne (A) liée au dispositif d'obtention d'images (10) et une seconde ligne longitudinale (X) s'étendant dans une extension longitudinale du véhicule (100), l'unité de traitement (30) étant configurée pour :

- obtenir une image du véhicule (100) à partir du dispositif d'obtention d'images (10), l'image représentant au moins une première et une seconde parties de véhicule (a_1, a_1) du véhicule (100) ;
- obtenir des informations de dimension du véhicule (100), les informations de dimension comprenant une première longueur (d1) de la première partie de véhicule (a_1) et une seconde longueur (d2) de la seconde partie de véhicule (a_2),
- déterminer une première distance (L_1) de la première partie de véhicule (a_1) par rapport au dispositif d'obtention d'images (10) et une seconde distance (L_2) de la seconde partie de véhicule (a_2) par rapport au dispositif d'obtention d'images (10), les première et seconde distances (L_1, L_2) étant déterminées en utilisant l'image, la première et de la seconde longueur (d1, d2) et un premier modèle trigonométrique ;
- en utilisant les première et seconde distances (L_1, L_2), l'image et un second modèle trigonométrique, estimer l'angle relatif ($\Theta$) entre le dispositif d'obtention d'images (10) et le véhicule (100), l'image étant une image en pixels et chaque pixel étant associé à un angle d'azimut et/ou d'altitude spécifique par rapport à une référence, la détermination des première et seconde distances (L_1, L_2) des première et seconde parties de véhicule (a_1, a_2) par rapport au dispositif d'obtention d'images (10) comprenant :
- dans le premier modèle trigonométrique, l'utilisation angles d'azimut et/ou d'altitude ($\alpha\_1$, $\alpha\_10$, $\alpha\_2$, $\alpha\_20$) associés aux parties d'extrémité (102, 104 ; 106, 108) des première et seconde parties de véhicule (a_1, a_2) respectives, la distance entre les parties d'extrémité (102, 104 ; 106, 108) de chaque partie de véhicule (a_1, a_2) correspondant à la longueur (d1, d2) de chaque partie de véhicule (a_1, a_2), **caractérisé en ce que**

la première distance (L_1) est déterminée en prévoyant la première longueur (d1) et la première distance (L_1) en tant que côtés dans un premier triangle avec les angles d'azimut et/ou d'altitude et la seconde distance (L_2) est déterminée en prévoyant la seconde longueur (d2) et la seconde distance (L_2) en tant que côtés dans un second triangle avec les angles d'azimut et/ou d'altitude, les premier et second triangles étant prévus dans des plans respectifs qui mutuellement par rapport à un axe de rotation commun (R).

10. Système (200) selon la revendication 9, dans lequel le dispositif d'obtention d'images (10) est monté sur un second véhicule (120), tel que sur un camion, ou sur un objet statique, tel que sur une station d'accueil pour le véhicule (100), un bâtiment ou similaire, le système étant configuré pour effectuer l'estimation d'angle relatif lorsque le véhicule (100) est dans un état désengagé par rapport au second véhicule (120) ou à l'objet statique.

11. Second véhicule (120), tel qu'un camion, comprenant le système selon l'une quelconque des revendications 9 à 10.

**12.** Procédé d'arrimage d'un véhicule non accouplé (100) à un second véhicule (120), comprenant :

- la détermination d'une trajectoire (T) pour le second véhicule (120) définissant une trajectoire de déplacement vers le véhicule (100), la trajectoire (T) étant déterminée en utilisant au moins un angle relatif ($\Theta$) entre le véhicule et le second véhicule, l'au moins un angle relatif ($\Theta$) étant estimé en utilisant un procédé selon l'une quelconque des revendications 1 à 8 ; et
- l'arrimage des véhicules en déplaçant le second véhicule (120) le long de la trajectoire (T) jusqu'au véhicule (100).

**13.** Programme informatique comprenant un moyen de code de programme pour exécuter le procédé selon l'une quelconque des revendications 1-8 et/ou 12 lorsque ledit programme est exécuté sur un ordinateur, tel que sur l'unité de traitement du système selon l'une quelconque des revendications 9 à 10.

**14.** Support lisible par ordinateur comportant un programme informatique comprenant un moyen de code de programme pour exécuter le procédé selon l'une quelconque des revendications 1-8 et/ou 12 lorsque ledit produit de programme est exécuté sur un ordinateur, tel que sur l'unité de traitement du système selon l'une quelconque des revendications 9 à 10.

Fig. 1

Fig. 2

EP 4 174 776 B1

Fig. 3a

Fig. 3b

17

Fig. 4

200

10 ——————— 30

Fig. 5

120

10

Fig. 6

S1

S2

S3

S4

Fig. 7a

S10

S20

Fig. 7b

**EP 4 174 776 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008064892 A1